# EUROPEAN PATENT SPECIFICATION

(11) **EP 3 273 425 B1**
(45) Date of publication and mention of the grant of the patent: **28.11.2018**
(21) Application number: 17163449.6
(22) Date of filing: 28.03.2017
(51) Int. Cl.: G08G 5/00, H04L 29/06, H04L 29/08

(54) **METHODS AND APPARATUS FOR FLIGHT BRIEFING DATA SYNCHRONIZATION**
VERFAHREN UND VORRICHTUNG ZUR SYNCHRONISATION VON FLUGBERATUNGSDATEN
PROCÉDÉS ET APPAREIL DE SYNCHRONISATION DE DONNÉES DE COMPTES RENDUS DE VOL

(30) Priority: 25.04.2016 US 201615137546
(43) Date of publication of application: 24.01.2018
(73) Proprietor: Honeywell International Inc., Morris Plains, NJ 07950 (US)
(72) Inventor: VASEK, Jiri, Morris Plains, NJ 07950 (US); TIEFTRUNK, Petr, Morris Plains, NJ 07950 (US); EICHLER, Zdenek, Morris Plains, NJ 07950 (US); BILEK, Jan, Morris Plains, NJ 07950 (US)
(74) Representative: Houghton, Mark Phillip

(56) References cited:
- US-A1- 2012 143 405
- US-A1- 2016 093 219

## Description

### TECHNICAL FIELD

Embodiments of the subject matter described herein relate generally to providing flight briefing information during flight. More particularly, embodiments of the subject matter relate to synchronizing electronic flight briefing information across multiple platforms and presenting the synchronized electronic flight briefing information via the multiple platforms.

### BACKGROUND

Flight briefing data, which may include flight briefing notices, is reviewed by a flight crew in preparation for a flight, prior to commencement of the flight. Flight briefing information may also be reviewed prior to a particular phase of flight or at any other point in time during and/or after a flight. The flight briefing information may include Notices to Airmen (NOTAMs), weather information, or the like, and may be reviewed via Electronic Flight Bag (EFB) software application or via printed information on paper. Generally, flight crew members quickly scan the documents and flag important flight briefing data for further reference or as a reminder of the important information during flight. This review/flag process is prone to errors and may lead to in-flight incidents or accidents. Important flight briefing data may be referenced after a pre-flight briefing as part of take-off preparation or as part of descent and landing preparation. However, flight crew members are working with integrated avionics during these times, and reverting back to a secondary source of information (EFB or paper notifications) might not be possible during high workload and high stress situations. It is also possible that the secondary source of information may be overlooked as flight crew members may forget the existence of a flagged, important item in the flight briefing information. US2016/093219 discloses systems and methods for processing aircraft flight information and flight plan information comprising techniques for managing flight data in real time, sharing flight data between a plurality of systems, dynamically managing flight information, generating flight plan information, providing flight plan information to a user, and closing flight plan discontinuities.

Accordingly, it is desirable to improve the process for providing flight crew members with important flight briefing information during flight. Furthermore, other desirable features and characteristics will become apparent from the subsequent detailed description and the appended claims, taken in conjunction with the accompanying drawings and the foregoing technical field and background.

### BRIEF SUMMARY

The invention is set out in accordance with the appended claims. Some embodiments of the present disclosure provide a method for managing a flight briefing data system. The method establishes, by a central computer system, a first communication connection with an electronic device and a second communication connection with an aircraft onboard avionics unit; transmits, by the central computer system, flight briefing data via the first communication connection and the second communication connection, wherein the flight briefing data comprises at least a plurality of Notices to Airmen (NOTAMs) associated with a pending flight; receives, by the central computer system, altered flight briefing data; and synchronizes the central computer system, the electronic device, and the aircraft onboard avionics unit, by transmitting the altered flight briefing data via the first communication connection and the second communication connection.

Some embodiments provide a method for manipulating flight briefing data. The method presents, by an electronic device, flight briefing data comprising at least Notices to Airmen (NOTAMs) for a pending flight; receives, by the electronic device, user input annotations to the flight briefing data; creates annotated flight briefing data, based on the user input; and transmits the annotated flight briefing data to a remote server for storage.

Some embodiments provide a method for presenting flight data onboard an aircraft. The method accesses, via a communication device onboard the aircraft, a database comprising a plurality of flight briefing notices and associated metadata; uploads the plurality of flight briefing notices and the associated metadata into an avionics system onboard the aircraft; and presents the plurality of flight briefing notices and the associated metadata via an aircraft onboard display.

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

### BRIEF DESCRIPTION OF THE DRAWINGS

A more complete understanding of the subject matter may be derived by referring to the detailed description and claims when considered in conjunction with the following figures, wherein like reference numbers refer to similar elements throughout the figures.
FIG. 1 is a diagram of a flight briefing data synchronization system, in accordance with the disclosed embodiments;
FIG. 2 is a functional block diagram of a central computer system, in accordance with the disclosed embodiments;
FIG. 3 is a functional block diagram of an electronic device, in accordance with the disclosed embodiments;
FIG. 4 is a functional block diagram of an avionics device, in accordance with the disclosed embodiments;
FIG. 5 is a flow chart that illustrates an embodiment of a process for managing a flight briefing synchronization system;
FIG. 6 is an exemplary embodiment of a communication diagram for a flight briefing data synchronization system;
FIG. 7 is a flow chart that illustrates an embodiment of a process for manipulating flight briefing data, from the perspective of an electronic device;
FIG. 8 is a flow chart that illustrates an embodiment of a process for presenting flight briefing data according to read/unread status;
FIG. 9 is a flow chart that illustrates an embodiment of a process for presenting flight data onboard an aircraft;
FIG. 10 is a flow chart that illustrates an embodiment of a process for filtering a plurality of flight briefing notices for presentation onboard an aircraft; and
FIG. 11 is a flow chart that illustrates an embodiment of a process for updating flight briefing notice data at an avionics system onboard an aircraft.

### DETAILED DESCRIPTION

The following detailed description is merely illustrative in nature and is not intended to limit the embodiments of the subject matter or the application and uses of such embodiments. As used herein, the word "exemplary" means "serving as an example, instance, or illustration." Any implementation described herein as exemplary is not necessarily to be construed as preferred or advantageous over other implementations. Furthermore, there is no intention to be bound by any expressed or implied theory presented in the preceding technical field, background, brief summary or the following detailed description.

The present disclosure presents methods and apparatus for synchronization of flight briefing data across platforms communicatively coupled via a flight briefing data synchronization system. One or more electronic or computing devices may be used by a flight crew to access electronic flight briefing notices stored at a server system and/or central computer system, and to review and/or annotate flight briefing notices during one or more flight briefings, which are then transmitted and stored at a server system and/or central computer system. The stored, annotated flight briefing notices are then accessed and uploaded onboard an aircraft, by an onboard avionics system, such that the flight crew may use the electronic versions of the flight briefing notices and the user-entered annotations during flight.

Certain terminologies are used with regard to the various embodiments of the present disclosure. Flight briefing data may include any notices for review by a flight crew as part of a pre-flight briefing, in-flight briefing, and/or post-flight briefing. Exemplary embodiments of flight briefing data may include, without limitation: Notices to Airmen (NOTAMs), weather data, or the like. Metadata associated with flight briefing data may include user-entered annotations and a read/unread status for each flight briefing notice. Annotations may include flagging a particular flight briefing notice, adding text/notes, highlighting, or other indications of importance for a particular flight briefing notice.

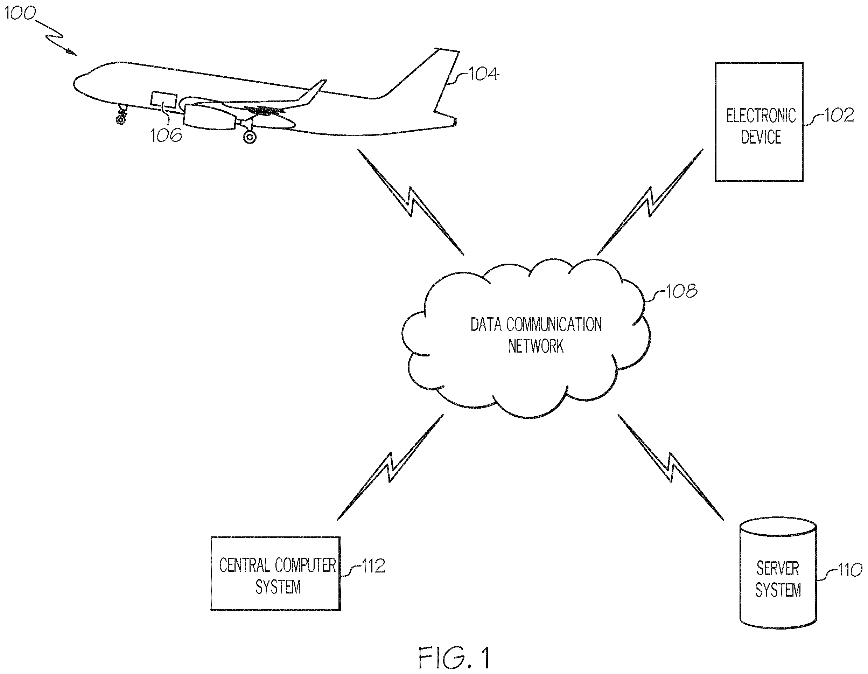

Turning now to the figures, FIG. 1 is a diagram of a flight briefing data synchronization system 100, in accordance with the disclosed embodiments. The flight briefing data synchronization system 100 may include at least an avionics device 106 onboard an aircraft 104 and an electronic device 102 in communication with a server system 110 and a central computer system 112 via a data communication network 108.

The electronic device 102 may be implemented as a personal computing device, such as a laptop computer, a tablet computer, a smartphone, a smartwatch, a personal digital assistant (PDA), or any other computing device capable of executing software applications applicable to an Electronic Flight Bag (EFB). Generally, the electronic device 102 is used during a pre-flight briefing, but the electronic device 102 may perform some or all of the described operations during flight and/or post-flight. The electronic device 102 is configured to present electronic flight briefing data for a user to view, and to receive user input flagging and/or annotating the electronic flight briefing data.

The aircraft 104 may be implemented by any fixed-wing or rotary aircraft, such as an airplane, helicopter, space shuttle, drone, or other aircraft equipped with the capability to communicate with an external server system 110. The aircraft 104 includes an onboard avionics device 106 capable of uploading, storing, and displaying flight briefing data applicable to a particular flight.

In certain embodiments, the data communication network 108 includes a packet switched network that facilitates packet-based data communication, addressing, and data routing. The packet switched network could be, for example, a wide area network, the Internet, or the like. In various embodiments, the data communication network 108 includes any number of public or private data connections, links or network connections supporting any number of communications protocols. The data communication network 108 may include the Internet, for example, or any other network based upon TCP/IP or other conventional protocols. In various embodiments, the data communication network 108 could also incorporate a wireless and/or wired telephone network, such as a cellular communications network for communicating with mobile phones, personal digital assistants, and/or the like. The data communication network 108 may also incorporate any sort of wireless or wired local and/or personal area networks, such as one or more IEEE 802.3, IEEE 802.16, and/or IEEE 802.11 networks, and/or networks that implement a short range (e.g., Bluetooth) protocol. For the sake of brevity, conventional techniques related to data transmission, signaling, network control, and other functional aspects of the systems (and the individual operating components of the systems) may not be described in detail herein.

The server system 110 may include any number of application servers, and each server may be implemented using any suitable computer. In some embodiments, the server system 110 includes one or more dedicated computers. In some embodiments, the server system 110 includes one or more computers carrying out other functionality in addition to server operations. In exemplary embodiments, the server system 110 maintains one or more databases of flight briefing data, which may be applicable to one or more particular flights (i.e., air routes) and/or particular aircraft.

The central computer system 112 may be implemented using any computing device with a processor, memory, and input/output (I/O) capabilities, and which is capable of communication with the server system 110, the electronic device 102, and the avionics device 106 via the data communication network 108. In certain embodiments, the central computer system 112 may be integrated into the server system 110, or in other words, the central computer system 112 and the server system 110 may be implemented as a single computer system that communicates with the avionics device 106 and the electronic device 102. Whether implemented as one integrated unit or implemented separately, the central computer system 112 has access to flight briefing data stored at the server system 110. Flight briefing data may include any notices for review by a flight crew as part of a pre-flight briefing, in-flight briefing, and/or post-flight briefing. Exemplary embodiments of flight briefing data may include, without limitation: Notices to Airmen (NOTAMs), weather data, or the like.

The central computer system 112 operates to synchronize flight briefing data across all platforms which are communicatively coupled via the data communication network 108. In other words, the central computer system 112 receives modifications, alterations, annotations, highlighting, "flags" for particular notices, a read/unread status for particular notices, and other metadata updates to the flight briefing data, and then transmits the updated flight briefing data to the avionics device 106, the electronic device 102, and the server system 110. Thus, the central computer system 112 ensures that the flight briefing data for the avionics device 106, the electronic device 102, and the server system 110 remains the same. A user could access the flight briefing data for a particular, pending flight from any of the platforms communicatively coupled to the central computer system 112, and the flight briefing data presented to the user is the same.

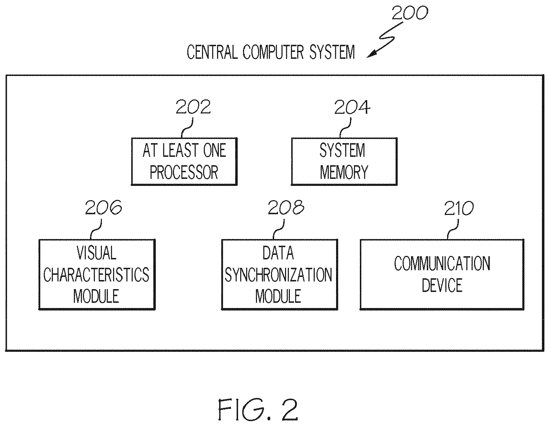

FIG. 2 is a functional block diagram of a central computer system 200, in accordance with the disclosed embodiments. It should be noted that the central computer system 200 can be implemented with the central computer system 112 depicted in FIG. 1. In this regard, the central computer system 200 shows certain elements and components of the central computer system 112 in more detail. The central computer system 200 may be implemented by any type of computer system or computing device that is capable of communication with an avionics device, an electronic device, and a server. The central computer system 200 generally includes at least one processor 202; some form of system memory 204; a visual characteristics module 206; a data synchronization module 208; and a communication device 210. These elements and features of the central computer system 200 may be operatively associated with one another, coupled to one another, or otherwise configured to cooperate with one another as needed to support the desired functionality - in particular, the synchronization of flight briefing data among various platforms, as described herein. For ease of illustration and clarity, the various physical, electrical, and logical couplings and interconnections for these elements and features are not depicted in FIG. 2. Moreover, it should be appreciated that embodiments of the central computer system 200 will include other elements, modules, and features that cooperate to support the desired functionality. For simplicity, FIG. 2 only depicts certain elements that relate to the flight briefing data synchronization techniques described in more detail below.

The at least one processor 202 may be implemented or performed with one or more general purpose processors, a content addressable memory, a digital signal processor, an application specific integrated circuit, a field programmable gate array, any suitable programmable logic device, discrete gate or transistor logic, discrete hardware components, or any combination designed to perform the functions described here. In particular, the at least one processor 202 may be realized as one or more microprocessors, controllers, microcontrollers, or state machines. Moreover, the at least one processor 202 may be implemented as a combination of computing devices, e.g., a combination of digital signal processors and microprocessors, a plurality of microprocessors, one or more microprocessors in conjunction with a digital signal processor core, or any other such configuration.

The at least one processor 202 communicates with system memory 204. The system memory 204 may be used to store flight briefing data; annotations to flight briefing data; "flags" for particular notices, highlighting, or other indication of importance used to mark a particular flight briefing notice; read/unread status for a particular notice, or the like. The system memory 204 may be realized using any number of devices, components, or modules, as appropriate to the embodiment. In practice, the system memory 204 could be realized as RAM memory, flash memory, EPROM memory, EEPROM memory, registers, a hard disk, a removable disk, or any other form of storage medium known in the art. In certain embodiments, the system memory 204 includes a hard disk, which may also be used to support functions of the at least one processor 202. The system memory 204 can be coupled to the at least one processor 202 such that the at least one processor 202 can read information from, and write information to, the system memory 204. In the alternative, the system memory 204 may be integral to the at least one processor 202. As an example, the at least one processor 202 and the system memory 204 may reside in a suitably designed application-specific integrated circuit (ASIC).

The visual characteristics module 206 is configured to recognize a read/unread status of each flight briefing notice, and to modify or change visual characteristics of the read flight briefing notices such that a user can easily recognize which flight briefing notices have been read by the user and which flight briefing notices have not yet been read by the user, via any of the platforms communicatively coupled to the central computer system 200. Applicable visual characteristics changed by the visual characteristics module 206 may include, without limitation: bold/un-bold text, italicized/non-italicized text, highlighted/non-highlighted text, underlined/non-underlined text, or any other text effect which may be applied to one or more text labels associated with flight briefing notices presented in list form.

The data synchronization module 208 is configured to transmit any received data across platforms communicatively coupled to the central computer system 200, such that all platforms have the same data and a user may access any platform to view or otherwise interact with identical data. Platforms communicatively coupled to the central computer system 200 include at least one server (e.g., the server system 110 depicted in FIG. 1), one or more electronic devices (e.g., the electronic device 102 depicted in FIG. 1), and an aircraft onboard avionics unit (e.g., the avionics device 106 depicted in FIG. 1). The data synchronization module 208 is configured to update and synchronize the platforms when: (1) the current version of a flight briefing notice is updated by a government, regulatory authority, airline, or other private entity, to generate an updated flight briefing notice; (2) alterations are made to any flight briefing notice by a user, to include user-entered annotations; (3) a user requests updated flight briefing notices; and/or (4) updated flight briefing notices are due, according to a timed interval schedule.

In practice, the visual characteristics module 206 and/or the data synchronization module 208 may be implemented with (or cooperate with) the at least one processor 202 to perform at least some of the functions and operations described in more detail herein. In this regard, the visual characteristics module 206 and/or the data synchronization module 208 may be realized as suitably written processing logic, application program code, or the like.

The communication device 210 is suitably configured to communicate data between the central computer system 200 and any platform communicatively coupled to the central computer system 200 (described above; e.g., avionics device, electronic device, server system). In certain embodiments, the communication device 210 is implemented as a wireless communication unit which is used to communicate data between the central computer system 200 and any connected peripheral wireless devices. In some embodiments, the communication device 210 connects to a WLAN network that is compatible with an IEEE 802.11 standard, and in other embodiments, the communication device 210 may connect to an ad-hoc network, a Bluetooth network, a personal area network (PAN), or the like. In some embodiments, the communication device 210 is implemented as a cellular communication device. In embodiments wherein the communication device 210 is a cellular communication device, an internal transceiver may be capable of providing bi-directional mobile phone voice and data communication, implemented using 3G technologies, such as: Code Division Multiple Access (CDMA), Universal Mobile Telecommunications System (UMTS) wideband CDMA (W-CDMA), Enhanced Data Rates for GSM Evolution (EDGE), Evolved EDGE, High Speed Packet Access (HSPA), CDMA2000, and the like. In some embodiments, 4G technologies may be used to implement the communication device 210, alone or in combination with 3G technologies, including without limitation: Evolved High Speed Packet Access (HSPA+), Long Term Evolution (LTE) and/or Long Term Evolution-Advanced (LTE-A). As described in more detail below, data received and/or transmitted by the communication device 210 may include, without limitation: flight briefing data; annotations to flight briefing data; "flags" for a particular notice, highlighting, or other indication of importance used to mark a particular flight briefing notice, a read/unread status for a particular notice, and other data compatible with the central computer system 200.

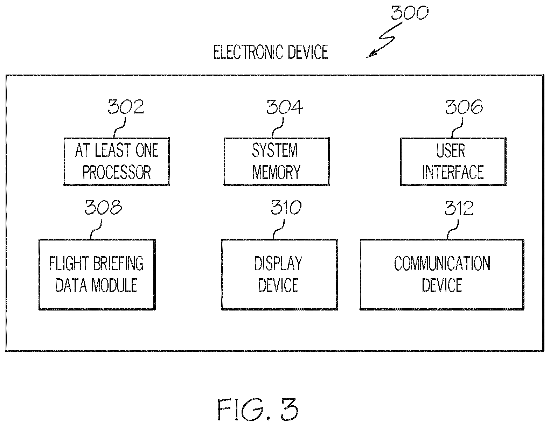

FIG. 3 is a functional block diagram of an electronic device 300, in accordance with the disclosed embodiments. It should be noted that the electronic device 300 can be implemented with the electronic device 102 depicted in FIG. 1. In this regard, the electronic device 300 shows certain elements and components of the electronic device 102 in more detail. The electronic device 300 generally includes, without limitation: at least one processor 302; system memory 304; a user interface 306; a flight briefing data module 308; a display device 310; and a communication device 312. The at least one processor 302, the system memory 304, and the communication device 312 are similar in configuration and function to their counterpart items described above in the context of the central computer system 200 depicted in FIG. 2. Accordingly, common features and operations of these elements of the electronic device 300 will not be redundantly described here.

The user interface 306 may include or cooperate with various features to allow a user to interact with the electronic device 300. Accordingly, the user interface 306 may include various human-to-machine interfaces, e.g., a keypad, keys, a keyboard, buttons, switches, knobs, a touchpad, a joystick, a pointing device, a virtual writing tablet, a touch screen, a microphone, or any device, component, or function that enables the user to select options, input information, or otherwise control the operation of the electronic device 300. For example, the user interface 306 could be manipulated by an operator to view, manipulate, annotate, flag, or otherwise interact with electronic flight briefing data.

In certain embodiments, the user interface 306 may include or cooperate with various features to allow a user to interact with the electronic device 300 via graphical elements rendered on a display element. Accordingly, the user interface 306 may initiate the creation, maintenance, and presentation of a graphical user interface (GUI). In certain embodiments, the display element implements touch-sensitive technology for purposes of interacting with the GUI. Thus, a user can manipulate the GUI by moving a cursor symbol rendered on the display (e.g., the display device 310, described herein), or by physically interacting with the display itself for recognition and interpretation, via the user interface 306.

The flight briefing data module 308 cooperates with the display device 310 to present electronic flight briefing data, which may include any notices for review by a flight crew as part of a pre-flight briefing, in-flight briefing, and/or post-flight briefing. Exemplary embodiments of flight briefing data may include, without limitation: Notices to Airmen (NOTAMs), weather data, or the like. Flight briefing data in an electronic form indicates that the flight briefing data is capable of presentation on the electronic device 300. The electronic flight briefing data may be obtained from any type of data storage, such as a server, database, or other form of data storage in communication with the electronic device 300. Electronic flight briefing data is generally updated and maintained by government and regulatory authorities, airlines, or other organization with access to electronic flight briefing data.

Additionally, the flight briefing data module 308 receives user input (via the user interface 306) to modify, annotate, "flag", highlight, or otherwise alter presented electronic flight briefing data, applies these modifications to the electronic flight briefing data to generate altered flight briefing data (i.e., modified flight briefing data, highlighted flight briefing data, flagged flight briefing data). In practice, the flight briefing data module 308 may be implemented with (or cooperate with) the at least one processor 302 to perform at least some of the functions and operations described in more detail herein. In this regard, the flight briefing data module 308 may be realized as suitably written processing logic, application program code, or the like.

The display device 310 is configured to display various icons, text, and/or graphical elements associated with electronic flight briefing data, flight briefing data annotations, flight briefing data highlighting, flight briefing data "flags", a read/unread status for particular notices, or the like. In an exemplary embodiment, the display device 310 is communicatively coupled to the user interface 306. The user interface 306 is communicatively coupled to the at least one processor 302, and the at least one processor 302 and the user interface 306 are cooperatively configured to display, render, or otherwise convey one or more graphical representations or images associated with electronic flight briefing data on the display device 310, as described in greater detail below. In some embodiments, the display device 310 is an integrated display that is built into the electronic device 300. However, in other embodiments, the display device 310 may be realized as a separate display element that is communicatively coupled to the electronic device 300. Certain embodiments of the display device 310 may include more than one display element, such that viewing electronic flight briefing data may be accomplished via more than one display.

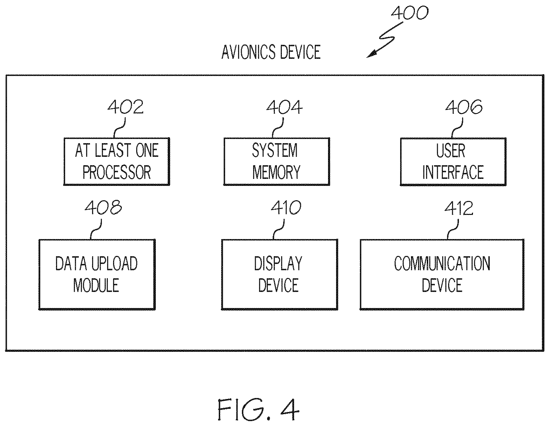

FIG. 4 is a functional block diagram of an avionics device 400, in accordance with the disclosed embodiments. It should be noted that the avionics device 400 can be implemented with the avionics device 106 depicted in FIG. 1. In this regard, the avionics device 400 shows certain elements and components of the avionics device 106 in more detail. The avionics device 400 may be implemented using any aircraft onboard avionics device which includes the components described herein, and which is capable of communication with an electronic device, a central computer system, and a server system (described previously with regard to FIGS. 1-3).

The avionics device 400 generally includes, without limitation: at least one processor 402; system memory 404; a user interface 406; a data upload module 408; a display device 410; and a communication device 412. The at least one processor 402, the system memory 404, the user interface 406, the display device 410, and the communication device 412 are similar in configuration and function to their counterpart items described above in the context of the electronic device 300 depicted in FIG. 3 and the central computer system 200 depicted in FIG. 2. Accordingly, common features and operations of these elements of the avionics device 400 will not be redundantly described here. However, the display device 410 is an aircraft display that is located within a cockpit of the aircraft and in certain embodiments, may be integral to the aircraft itself. It will be appreciated that although the display device 410 may be implemented using a single aircraft onboard display, certain embodiments may use additional displays to accomplish the functionality of the display device 410 described herein.

The avionics device 400 is generally located onboard an aircraft, and the data upload module 408 functions to provide flight briefing data and/or altered flight briefing data for viewing, via the display device 410, onboard the aircraft. The data upload module 408 operates cooperatively with the communication device 412 and the system memory 404 to obtain, upload, and store electronic flight briefing data, including electronic flight briefing data that has been altered or modified to include annotations, highlighting, flags, indications of a read/unread status, or other metadata associated with the flight briefing data based on user review and user modification. In practice, the data upload module 408 may be implemented with (or cooperate with) the at least one processor 402 to perform at least some of the functions and operations described in more detail herein. In this regard, the data upload module 408 may be realized as suitably written processing logic, application program code, or the like.

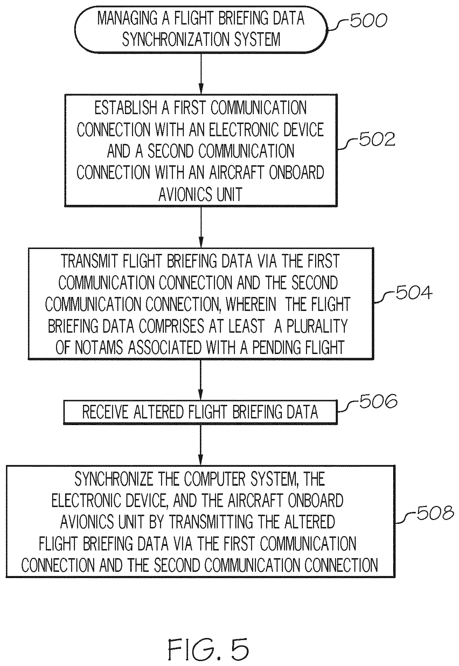

FIG. 5 is a flow chart that illustrates an embodiment of a process 500 for managing a flight briefing data synchronization system. In certain embodiments, the process 500 may be performed by a central computer system, such as that described above with regard to FIGS. 1-2. However, the process 500 may be implemented using any computer system in communication with an avionics device and an electronic device (described above with regard to FIG. 1).

For ease of description of clarity, it is assumed that the process 500 begins by establishing a first communication connection with an electronic device and a second communication connection with an aircraft onboard avionics unit (step 502). The first and second communication connections are generally wireless communication connections, and may include any form of wireless communication, such as that described with regard to FIG. 1. The communication connections are used to synchronize flight briefing data between the central computer system, the electronic device, and the aircraft onboard avionics device, such that a user may access the flight briefing data from any of the communicatively connected platforms and view the same flight briefing data, including user-entered metadata (e.g., annotations, highlighting, flags, read/unread status, etc.).

The process 500 then transmits flight briefing data via the first communication connection and the second communication connection, wherein the flight briefing data comprises at least a plurality of Notices to Airmen (NOTAMs) associated with a pending flight (step 504). Here, the flight briefing data includes at least a plurality of NOTAMs, which are notices filed with an aviation authority to alert flight crew members of potential hazards along a flight route or at a location that could affect the safety of the pending flight, and the aviation authority, in turn, provides a means of disseminating relevant NOTAMs to flight crew members. In certain embodiments, the flight briefing data may also include weather data or other types of notices or advisory data applicable to the pending flight, and which may be part of a pre-flight briefing, an in-flight briefing, or a post-flight briefing.

Next, the process 500 receives altered flight briefing data (step 506). In step 504, the process 500 transmits the original flight briefing data that has been supplied by the aviation authority. The process 500 may obtain the original flight briefing data from a data storage location maintained and periodically updated the aviation authority, and transmit that original flight briefing data to other platforms (e.g., an electronic device and/or an aircraft onboard avionics device). In step 506, the process 500 receives a set of altered or modified flight briefing data which includes (1) the original flight briefing data, and (2) additional metadata that has been entered by a user via one of the communicatively coupled platforms (e.g., the electronic device or the aircraft onboard avionics device). Here, the additional metadata may include one or more flags for particular notices, annotations, highlighting, a read/unread status for particular notices, or other user-entered data associated with the flight briefing data or flight briefing notices. As one example, the process 500 may transmit the original flight briefing data to an electronic device, and a user may access the transmitted, original flight briefing data via the electronic device. When the user accesses and reviews the original flight briefing data, the user may then annotate or otherwise add metadata to the original flight briefing data, to generate altered flight briefing data (i.e., modified flight briefing data, annotated flight briefing data). The process 500 then receives the altered flight briefing data in step 506, as a data transmission from the electronic device.

The process 500 then synchronizes the computer system, the electronic device, and the aircraft onboard avionics unit by transmitting the altered flight briefing data via the first communication connection and the second communication connection (step 508). Once the altered flight briefing data is received (step 506), the process 500 then transmits the altered flight briefing data to the other platforms in communication with the central computer system and/or the server system, to ensure that all of the platforms have the most updated version of the flight briefing data. Thus, the process 500 "synchronizes" each of the connected platforms by continuously transmitting the updated data to all connected platforms.

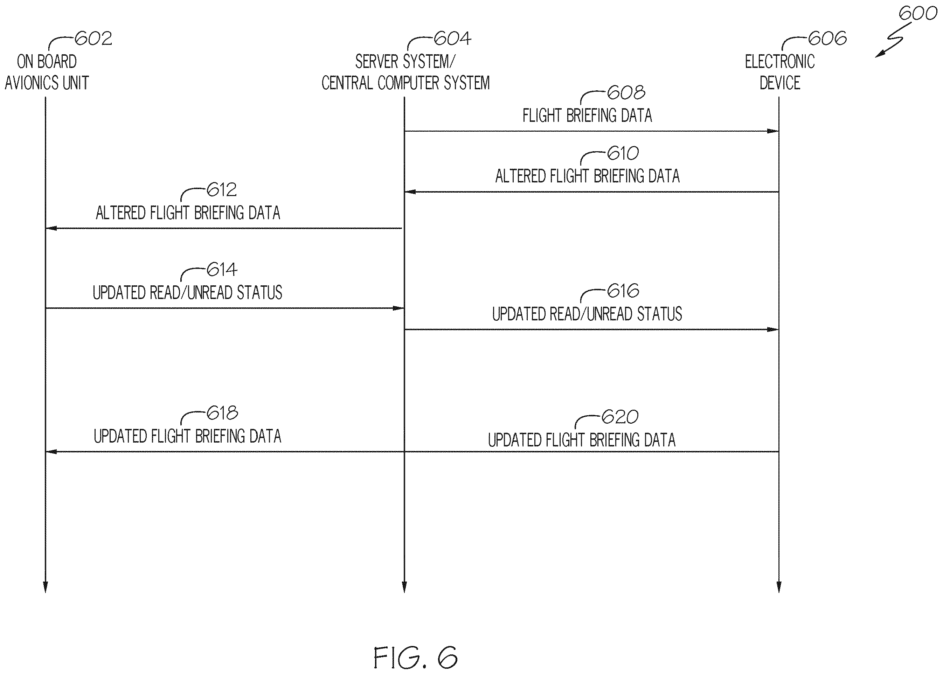

FIG. 6 is an exemplary embodiment of a communication diagram for a flight briefing data synchronization system 600. As shown, the flight briefing synchronization system includes at least three platforms in communication: an aircraft onboard avionics unit 602, a server system and/or central computer system 604, and an electronic device 606. Although the embodiment of a flight briefing data synchronization system shown includes one of each type of platform, the flight briefing data synchronization system may include more than one aircraft onboard avionics unit 602, server system 604, and/or electronic device 606.

The exemplary embodiment shown includes a series of communications between the platforms of the flight briefing synchronization system. It should be appreciated that the series of communications may include additional or fewer data transmissions, and that some of the series of communications may be executed in a different order than that shown. Here, the series of communications begins when the server system/central computer system 604 transmits a set of original flight briefing data 608 to the electronic device 606. The original flight briefing data 608 transmitted to the electronic device 606 includes electronic flight briefing data created, updated, and maintained by a government, aviation, or regulatory authority and/or by an airline or other private company. The original flight briefing data 608, prior to transmission to the electronic device 606, may be stored at the server system/central computer system 604, or the server system/central computer system 604 may communicate with another data storage location from which the original flight briefing data is obtained.

After receiving the original flight briefing data 608, the electronic device 606 may be used by a flight crew to view or otherwise interact with electronic data during completion of a flight briefing (e.g., a pre-flight briefing, an in-flight briefing, a post-flight briefing). During the flight briefing, the flight crew users of the electronic device 606 may flag or otherwise indicate the importance of certain ones of the flight briefing notices, highlight particular text, enter annotations, or the like. This user-entered data may be referred to as "metadata" that is associated with the original flight briefing data 608. The electronic device 606 generates altered flight briefing data that includes the original flight briefing data 608 and the metadata, and transmits the altered flight briefing data 610 to the server system/central computer system 604. The electronic device 606 also provides an indication of a read/unread status for each notice of the altered flight briefing data 610, and the read/unread status is included in the metadata associated with the altered flight briefing data 610. The read/unread status indicates whether particular ones of the flight briefing notices have been accessed and viewed by the user.

The server system/central computer system 604 then "synchronizes" the platforms of the flight briefing data synchronization system 600. Synchronization includes providing the altered flight briefing data to all other platforms. In the exemplary embodiment shown, there are three platforms: the aircraft onboard avionics unit 602, the server system/central computer system 604, and the electronic device 606. Since the altered flight briefing data 610 originated from the electronic device 606, the other two platforms require updated data such that any flight briefing data stored on any platform is identical. For example, synchronization of the flight briefing data synchronization system 600 platforms would enable a user to access the altered flight briefing data via any of the three platforms shown. To accomplish this synchronization, the server system/central computer system 604 stores the altered flight briefing data 610 transmitted from the electronic device 606, and transmits the altered flight briefing data 612 to the aircraft onboard avionics unit 602. Thus, the aircraft onboard avionics unit 602, the server system/central computer system 604, and the electronic device 606 have received and stored the same altered flight briefing data.

After receiving the altered flight briefing data 612, the aircraft onboard avionics unit 602 generally uploads the altered flight briefing data 612 for a flight crew to view, via the aircraft onboard avionics unit 602, onboard the aircraft prior to flight, during flight, and/or post-flight. Here, the flight crew may view the altered flight briefing data 612, including the associated metadata which includes a status indicating whether each flight briefing notice of the altered flight briefing data 612 has been read or has not yet been read. When the flight crew views one or more of the flight briefing notices via the aircraft onboard avionics unit 602, the read/unread status would change to reflect which flight briefing notices have been viewed. The aircraft onboard avionics unit 602 then transmits an updated read/unread status 614 to the server system/central computer system 604. Once the updated read/unread status 614 is received, the server system/central computer system 604 then synchronizes the flight briefing data synchronization system 600 again by storing the updated read/unread status 614 and transmitting the updated read/unread status 616 to the electronic device 606.

As part of the exemplary embodiment shown, the server system/central computer system 604 receives updated flight briefing data from the government or regulatory authority described previously, and then again synchronizes the flight briefing data synchronization system 600 by storing the updated flight briefing data, and transmitting the updated flight briefing data 618, 620 to the aircraft onboard avionics unit 602 and the electronic device 606, respectively. Thus, each of the platforms of the flight briefing data synchronization system 600 again includes the same flight briefing data.

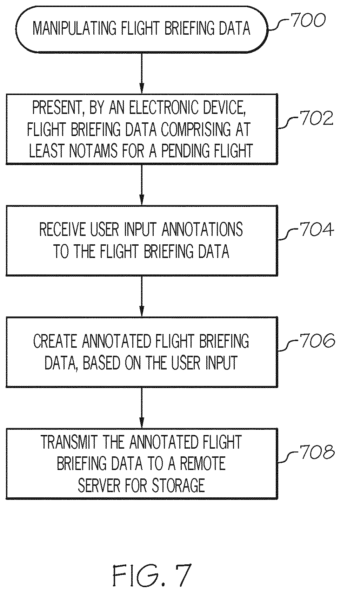

FIG. 7 is a flow chart that illustrates an embodiment of a process 700 for manipulating flight briefing data, from the perspective of an electronic device. First, the process 700 presents, by an electronic device, flight briefing data comprising at least NOTAMs for a pending flight (step 702). The process 700 may present the flight briefing data via a software application executed on the electronic device, such as an Electronic Flight Bag (EFB) application applicable to a particular flight briefing procedure. Flight briefing data may include any notices for review by a flight crew as part of a pre-flight briefing, in-flight briefing, and/or post-flight briefing. Exemplary embodiments of flight briefing data may include, without limitation: Notices to Airmen (NOTAMs), weather data, or the like. Flight briefing data may also be referred to as a plurality of flight briefing notices, wherein each of the notices comprises a NOTAM, a weather notice, or any other type of advisory notice that provides information for the flight crew regarding a pending flight. The flight briefing data presented by the electronic device in step 702 is original flight briefing data that has been obtained from a government, regulatory authority, aviation authority, airline, or other entity that maintains a database of flight briefing data. The received, original flight briefing data is in its original form, and has not yet been altered or modified by a user.

Next, the process 700 receives user input annotations to the flight briefing data (step 704). The user input annotations are generally received via a user interface of the electronic device (described previously with regard to FIG. 3). In certain embodiments, the user-entered annotations may also be referred to as "metadata" that is associated with the flight briefing data. In some embodiments, the annotations may include "flags" for one or more flight briefing notices, indicating user-designated important conditions associated with the pending flight. Here, a user may flag particular flight briefing notices to call attention to the particular flight briefing notice when accessed at a later time. In some embodiments, the annotations may include user input text notes, which may be any notes that a user chooses to enter, such that the user may access the notes when viewing the flight briefing notices at a later time. Other embodiments of annotations that a user may enter may include highlighting and other text effects, or other types of indications of importance for particular notices or parts/subsets of notices.

The process 700 then creates annotated flight briefing data, based on the user input (step 706). The annotated flight briefing data includes: (1) the original flight briefing data, and (2) the user-entered annotations (i.e., the metadata). Then the process 700 transmits the annotated flight briefing data to a remote server for storage (step 708).

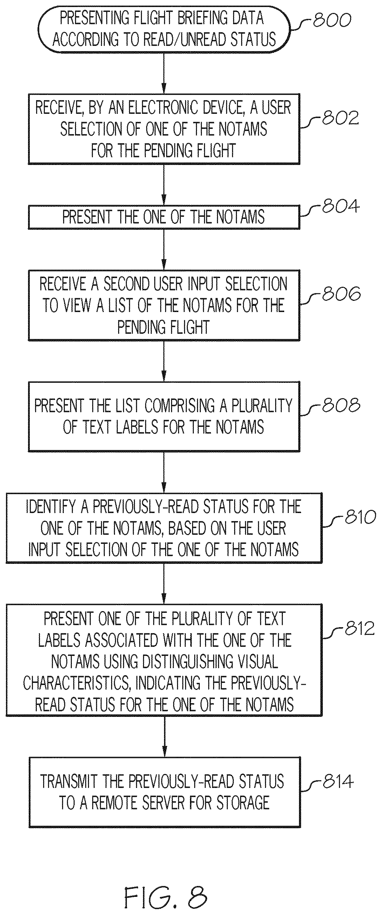

FIG. 8 is a flow chart that illustrates an embodiment of a process 800 for presenting flight briefing data according to read/unread status, from the perspective of an electronic device (as described previously with regard to FIGS. 1-2). First, the process 800 receives, by an electronic device, a user input selection of one of a plurality of Notices to Airmen (NOTAMs) for the pending flight (step 802). Here, the process 800 has received flight briefing data associated with a pending flight, the flight briefing data comprising a plurality of flight briefing notices (e.g., NOTAMs, weather notices, etc.). This particular embodiment of the process 800 applies to presentation of the NOTAMs. However, other embodiments of the process 800 may be applied to other types of flight briefing notices, without limitation.

In step 802, a user selects one of the plurality of NOTAMs for viewing via the electronic device. In exemplary embodiments of step 802, a user may use a tablet computer to select and access a NOTAM in electronic form. In response to the user selection, the process 800 presents the one of the NOTAMs (step 804), via the electronic device, such that the user may view and read the selected NOTAM. When a particular flight briefing notice (e.g., NOTAM) is selected for viewing by a user, the process 800 opens the flight briefing notice, and as described in process 700 of FIG. 7, the user may also enter notes and/or flag a particular flight briefing notice as important to review at a later time.

After presenting the one of the NOTAMs, the process 800 receives a second user input selection to view a list of the NOTAMs for the pending flight (step 806). In response to the user input selection, the process 800 presents the list comprising a plurality of text labels for the NOTAMs (step 808). Here, the process 800 receives a user command to exit the viewing mode for the one of the NOTAMs, and returns to the list of NOTAMs from which a user may select others for viewing. Although this particular embodiment of the process 800 uses a list of text labels for the plurality of NOTAMs for presentation to a user, and from which to receive user selections, in other embodiments the plurality of NOTAMs may be presented as a group of icons, symbols, numbers, or any other visual element identifying each of the plurality of NOTAMs such that each are distinguishable.

The process 800 identifies a previously-read status for the one of the NOTAMs, based on the user input selection of the one of the NOTAMs (step 810). Here, the one of the NOTAMs is recognized by the process 800 as previously read by a user, based on the user selection to view the one of the NOTAMs (step 802) and the presentation of the one of the NOTAMs (step 804).

The process 800 then presents one of the plurality of text labels associated with the one of the NOTAMs using distinguishing visual characteristics, indicating the previously-read status for the one of the NOTAMs (step 812). When the user makes the selection to "exit" the viewing/reading mode of the one of the NOTAMs (step 806), and returns to the list of NOTAMs (step 808), the one particular NOTAM that was previously read (i.e., previously selected and presented) is presented using distinguishing visual characteristics. In some embodiments, distinguishing visual characteristics may include presenting the unread NOTAMs in the list using bold text labels, and presenting the previously read NOTAMs using un-bold text labels. In some embodiments, distinguishing visual characteristics may include presenting the unread NOTAMs in the list using highlighted text labels, and presenting the previously read NOTAMs using un-highlighted text labels. Distinguishing visual characteristics may include any visual effect presented differently for the un-read NOTAMs versus the previously read NOTAMs.

The process 800 then transmits the previously-read status to a remote server for storage (step 814). The read/unread status for each of the flight briefing notices (e.g., the NOTAMs) is transmitted for storage, such that other devices or platforms accessing the NOTAMs may be presented with distinguishing visual characteristics that indicate a read/unread status.

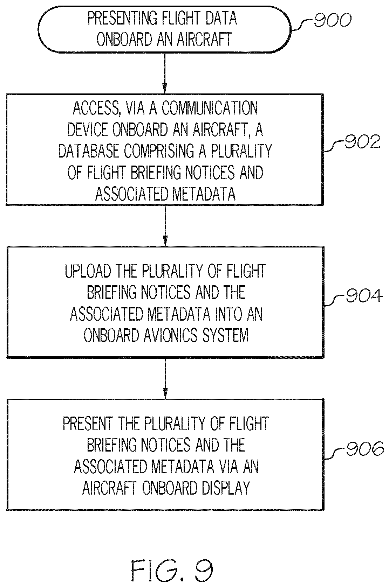

FIG. 9 is a flow chart that illustrates an embodiment of a process 900 for presenting flight data onboard an aircraft. First, the process 900 accesses, via a communication device onboard an aircraft, a database comprising a plurality of flight briefing notices and associated metadata (step 902). The plurality of flight briefing notices is an electronic form of data applicable to a pending flight, which is generally presented as part of a flight briefing for the pending flight (e.g., a pre-flight briefing, in-flight briefing, post-flight briefing). Exemplary embodiments of flight briefing data or flight briefing notices may include, without limitation: Notices to Airmen (NOTAMs), weather data, or the like. Metadata associated with the flight briefing notices may include user-entered annotations and a read/unread status for each flight briefing notice. Annotations may include flagging a particular flight briefing notice, adding text/notes, highlighting, or other indications of importance for a particular flight briefing notice. Here, the process 900 accesses flight briefing notices for a pending flight that have been accessed and annotated by a user, generally from a personal computing device or electronic device of some type during a pre-flight briefing. The database may be maintained by the airline, a private entity, a government or regulatory agency, an aviation authority, or the like.

Next, the process 900 uploads the plurality of flight briefing notices and the associated metadata into an onboard avionics system (step 904). In certain embodiments, the process 900 executes prior to, or at the beginning stages of, the pending flight. In this example, the process 900 uploads all available flight briefing notices (e.g., NOTAMs) and associated user-entered annotations, such that the notices and annotations are available for viewing onboard the aircraft during the flight. When requested, via the aircraft onboard avionics system, by a user onboard the aircraft, the process 900 presents the plurality of flight briefing notices and the associated metadata via an aircraft onboard display (step 906). The aircraft onboard display may include any applicable display associated with the avionics system in the cockpit of the aircraft.

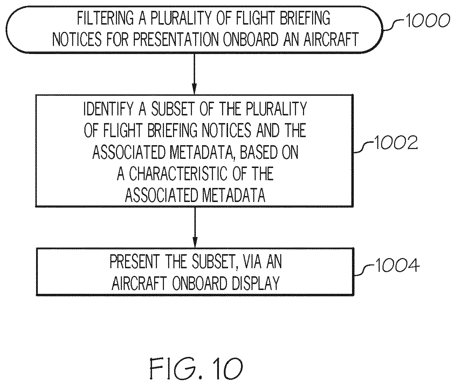

FIG. 10 is a flow chart that illustrates an embodiment of a process 1000 for filtering a plurality of flight briefing notices for presentation onboard an aircraft. First, the process 1000 identifies a subset of the plurality of flight briefing notices and the associated metadata, based on a characteristic of the metadata (step 1002). Flight briefing notices may be altered or modified to include user-entered metadata during a flight briefing, and accessed during flight for purposes of keeping the flight crew informed of important conditions or hazards to anticipate during the flight. Characteristics of the metadata may include, without limitation: flagged notices, annotations to particular notices, highlighting or other text effects for one or more notices, a read/unread status for each notice, and a version number or other indication that a particular notice has been recently updated. A "flag" is a user-entered indication of importance for a particular flight briefing notice (e.g., NOTAM). Annotations may include any user-entered text notes for a particular flight briefing notice. Highlighting, underlining, and other text effects may be used to emphasize parts of a particular flight briefing notice. Each flight briefing notice, once read, is associated with metadata indicating that the particular flight briefing notice has been read.

Here, the process 1000 identifies a subset of flight briefing notices based on an identified characteristic of the metadata. For example, the process 1000 may identify a subset including all of the flagged flight briefing notices. As another example, the process 1000 may identify all of the annotated flight briefing notices. In another example, the process 1000 may identify any flight briefing notices that are associated with any form of user-entered metadata.

Once the subset is identified (step 1002), the process 1000 then presents the subset, via an aircraft onboard display (step 1004). The user may select the subset, based on filtering criteria entered into a user interface of an applicable avionics system and/or aircraft onboard display. In this manner, a user may select a particular subset of flight briefing notices to be presented during the flight. For example, a user may select a subset of flight briefing notices which have been "flagged" by a user as important for the flight, and thus present only the "flagged" notices during the flight. In some embodiments, the process 1000 presents the subset and the other flight briefing notices at the same time, while using distinguishing visual characteristics to present the subset in such a way that the subset is distinct from the other flight briefing notices. In other embodiments, however, the process 1000 presents only the identified subset, thus filtering the flight briefing notices to only present the flight briefing notices satisfying particular criteria (e.g., user-entered criteria).

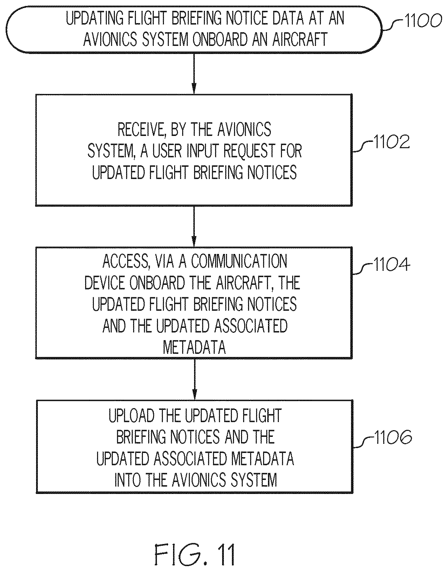

FIG. 11 is a flow chart that illustrates an embodiment of a process 1100 for updating flight briefing notice data at an avionics system onboard an aircraft. Exemplary embodiments of the process 1100 execute during a flight, such that the flight crew already has access to a plurality of flight briefing notices applicable to the flight, and requires updated versions of the flight briefing data/notices. First, the process 1100 receives, by the avionics system, a user input request for updated flight briefing notices (step 1102). Here, a user may enter a request for the updated flight briefing notices via the same avionics system at which the first set of flight briefing notices have been stored and are available to view during the flight. The user may request updated flight briefing notices at any time during the flight.

Next, the process 1100 accesses, via a communication device onboard the aircraft, the updated flight briefing notices and the updated associated metadata (step 1104). Generally, the updated flight briefing notices have been updated by a government or regulatory agency, an airline, an aviation authority, or other private entity which maintains, updates, and stores such flight briefing notices (e.g., NOTAMs and/or weather notices). In this step, the process 1100 accesses a database or other data storage location from which updated flight briefing notices may be obtained. In some embodiments, the process 1100 retrieves the updated flight briefing data from this data storage location. In other embodiments, a request may be sent from the avionics system, via the communication device, and the updated flight briefing data may be received as a data transmission in response to the request.

The process 1100 then uploads the updated flight briefing notices and the updated associated metadata into the avionics system (step 1106). After accessing the updated flight briefing notices and the updated associated metadata (step 1104), the process 1100 retains and stores the updated data onboard the aircraft, for viewing and use during the flight and post-flight. In some embodiments, the process 1100 replaces the older versions of the flight briefing notices with the updated version of the flight briefing notices. In other embodiments, the process 1100 may retain and store all versions of the flight briefing notices for comparison and other use.

Although this particular embodiment of the process 1100 begins when a user input request is received for updated flight briefing notices (step 1102), other embodiments of the process 1100 may begin when updated flight briefing notices are due, according to a timed interval schedule. For example, the process 1100 may automatically request updated flight briefing notices every half-hour or every hour, prior to and during flight. In other embodiments, the process 1100 may receive updated flight briefing notices via a data "push" from a central computer system or server system, according to a timed interval schedule. In this example, the process 1100 receives updated flight briefing notices, without transmitting a request or accessing a database to obtain the updated data. The process 1100 may receive the data push of updated flight briefing notices continuously, without requiring a user input request. Certain other embodiments of the process 1100 may begin when updated flight briefing notices are sent, via a data push from a central computer system, according to an event-driven schedule. In this example, updated flight briefing notices may be received by the process 1100 when an event occurs, such as when a particular flight briefing notice is updated, when a particular event occurs during flight (e.g., a flight phase change), or at any other time that the occurrence of an event triggers the data push. In this way, the process 1100 receives updated flight briefing notices when changes have occurred, and when knowledge of such changes may be useful for the flight crew.

The various tasks performed in connection with processes 500 and 700-1100 may be performed by software, hardware, firmware, or any combination thereof. For illustrative purposes, the following description of processes 500 and 700-1100 may refer to elements mentioned above in connection with FIGS. 5 and 7-11. In practice, portions of processes 500 and 700-1100 may be performed by different elements of the described system. It should be appreciated that processes 500 and 700-1100 may include any number of additional or alternative tasks, the tasks shown in FIGS. 5 and 7-11 need not be performed in the illustrated order, and processes 500 and 700-1100 may be incorporated into a more comprehensive procedure or process having additional functionality not described in detail herein. Moreover, one or more of the tasks shown in FIGS. 5 and 7-11 could be omitted from an embodiment of the processes 500 and 700-1100 as long as the intended overall functionality remains intact.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

When implemented in software or firmware, various elements of the systems described herein are essentially the code segments or instructions that perform the various tasks. The program or code segments can be stored in a processor-readable medium or transmitted by a computer data signal embodied in a carrier wave over a transmission medium or communication path. The "computer-readable medium", "processor-readable medium", or "machine-readable medium" may include any medium that can store or transfer information. Examples of the processor-readable medium include an electronic circuit, a semiconductor memory device, a ROM, a flash memory, an erasable ROM (EROM), a floppy diskette, a CD-ROM, an optical disk, a hard disk, a fiber optic medium, a radio frequency (RF) link, or the like. The computer data signal may include any signal that can propagate over a transmission medium such as electronic network channels, optical fibers, air, electromagnetic paths, or RF links. The code segments may be downloaded via computer networks such as the Internet, an intranet, a LAN, or the like.

For the sake of brevity, conventional techniques related to signal processing, data transmission, signaling, network control, and other functional aspects of the systems (and the individual operating components of the systems) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter.

Some of the functional units described in this specification have been referred to as "modules" in order to more particularly emphasize their implementation independence. For example, functionality referred to herein as a module may be implemented wholly, or partially, as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices, or the like. Modules may also be implemented in software for execution by various types of processors. An identified module of executable code may, for instance, comprise one or more physical or logical modules of computer instructions that may, for instance, be organized as an object, procedure, or function. Nevertheless, the executables of an identified module need not be physically located together, but may comprise disparate instructions stored in different locations that, when joined logically together, comprise the module and achieve the stated purpose for the module. A module of executable code may be a single instruction, or many instructions, and may even be distributed over several different code segments, among different programs, and across several memory devices. Similarly, operational data may be embodied in any suitable form and organized within any suitable type of data structure. The operational data may be collected as a single data set, or may be distributed over different locations including over different storage devices, and may exist, at least partially, merely as electronic signals on a system or network.

While at least one exemplary embodiment has been presented in the foregoing detailed description, it should be appreciated that a vast number of variations exist. It should also be appreciated that the exemplary embodiment or embodiments described herein are not intended to limit the scope, applicability, or configuration of the claimed subject matter in any way. Rather, the foregoing detailed description will provide those skilled in the art with a convenient road map for implementing the described embodiment or embodiments. It should be understood that various changes can be made in the function and arrangement of elements without departing from the scope defined by the claims, which includes known equivalents and foreseeable equivalents at the time of filing this patent application.

## Claims

1. A method for managing a flight briefing data system, the method comprising:
establishing, by a central computer system, a first communication connection with an electronic device and a second communication connection with an aircraft onboard avionics unit;
transmitting, by the central computer system, flight briefing data via the first communication connection and the second communication connection, wherein the flight briefing data comprises at least a plurality of Notices to Airmen, NOTAMs, associated with a pending flight;
receiving, by the central computer system, altered flight briefing data comprising the plurality of NOTAMs, user-entered annotations to one or more of the plurality of NOTAMs, and visual characteristics indicating an unread status or a previously-read status for each of the plurality of NOTAMs;
storing the altered flight briefing data, by the central computer system; and
synchronizing, by the central computer system, the central computer system, the electronic device, and the aircraft onboard avionics unit, by transmitting the altered flight briefing data via the first communication connection and the second communication connection.

2. The method of Claim 1, further comprising:
receiving, by the central computer system, flagged flight briefing data comprising flags indicating user-designated important conditions associated with the pending flight, wherein the altered flight briefing data comprises the flagged flight briefing data;
storing, by the central computer system, the flagged flight briefing data; and
transmitting the flagged flight briefing data via the first communication connection and the second communication connection.

3. The method of Claim 1, further comprising:
receiving, by the central computer system, a plurality of Notices to Airmen, NOTAMs, wherein the flight briefing data comprises the plurality of NOTAMs;
storing the plurality of NOTAMs;
in response to a request from the electronic device, transmitting the plurality of NOTAMs via the first communication connection;
receiving, by the central computer system, annotated NOTAM data from the electronic device, wherein the annotated NOTAM data comprises user input metadata associated with one or more of the plurality of NOTAMs, and wherein the altered flight briefing data comprises the annotated NOTAM data; and
storing the annotated NOTAM data;
wherein synchronizing the flight briefing data further comprises:
receiving a request for the annotated NOTAM data from the aircraft onboard avionics unit; and
in response to the request, transmitting the annotated NOTAM data via the second communication connection.

4. The method of Claim 1, further comprising:
receiving, by the central computer system, a request for synchronization via at least one of the first communication connection and the second communication connection;
wherein synchronizing further comprises:
in response to the request, transmitting the altered flight briefing data via the at least one of the first communication connection and the second communication connection.

5. The method of Claim 1, further comprising:
synchronizing the central computer system, the electronic device, and the aircraft onboard avionics unit according to a timed interval schedule.

6. The method of Claim 1, further comprising:
synchronizing the central computer system, the electronic device, and the aircraft onboard avionics unit according to an event-driven schedule.

7. A central computer system for managing a flight briefing data system, the central computer system comprising:
a system memory element (204);
a communication device (210) configured to establish a first communication connection with an electronic device and a second communication connection with an aircraft onboard avionics unit;
a visual characteristics module (206) configured to recognize an unread or previously-read status of each of a plurality of Notices to Airmen, NOTAMs;
at least one processor (202), communicatively coupled to the system memory element, the communication device, and the user interface, the at least one processor configured to:
transmit flight briefing data via the first communication connection and the second communication connection, wherein the flight briefing data comprises at least a plurality of Notices to Airmen, NOTAMs, associated with a pending flight;
receive, via the communication device, altered flight briefing data comprising the plurality of NOTAMs, user-entered annotations to one or more of the plurality of NOTAMs, and visual characteristics indicating an unread status or a previously-read status for each of the plurality of NOTAMs;
store the altered flight briefing data; and
synchronize the central computer system, the electronic device, and the aircraft onboard avionics unit, by transmitting the altered flight briefing data via the first communication connection and the second communication connection.

8. The central computer system of Claim 7, wherein the at least one processor is further configured to:
receive, via the communication device, flagged flight briefing data comprising flags indicating user-designated important conditions associated with the pending flight, wherein the altered flight briefing data comprises the flagged flight briefing data;
store the flagged flight briefing data; and
transmit the flagged flight briefing data via the first communication connection and the second communication connection.

9. The central computer system of Claim 7, wherein the at least one processor is further configured to:
receive, via the communication device, a plurality of Notices to Airmen (NOTAMs), wherein the flight briefing data comprises the plurality of NOTAMs;
store the plurality of NOTAMs;
in response to a request from the electronic device, transmit the plurality of NOTAMs via the first communication connection;
receive, via the communication device, annotated NOTAM data from the electronic device, wherein the annotated NOTAM data comprises user input metadata associated with one or more of the plurality of NOTAMs, and wherein the altered flight briefing data comprises the annotated NOTAM data; and
store the annotated NOTAM data;
wherein synchronizing the flight briefing data further comprises:
receiving a request for the annotated NOTAM data from the aircraft onboard avionics unit; and
in response to the request, transmitting the annotated NOTAM data via the second communication connection.

10. The central computer system of Claim 7, wherein the at least one processor is further configured to:
receive, via the communication device, a request for synchronization via at least one of the first communication connection and the second communication connection;
wherein synchronizing further comprises:
in response to the request, transmitting the altered flight briefing data via the at least one of the first communication connection and the second communication connection.

11. The central computer system of Claim 7, wherein the at least one processor is further configured to:
synchronize the central computer system, the electronic device, and the aircraft onboard avionics unit according to a timed interval schedule.

12. The central computer system of Claim 7, wherein the at least one processor is further configured to:
synchronize the central computer system, the electronic device, and the aircraft onboard avionics unit according to an event-driven schedule.

## Patentansprüche

1. Verfahren zum Managen eines Flugeinweisungsdatensystems, wobei das Verfahren Folgendes umfasst:
Aufbauen durch ein zentrales Computersystem einer ersten Kommunikationsverbindung mit einer elektronischen Einrichtung und einer zweiten Kommunikationsverbindung mit einer bordinternen Luftfahrzeug-Avionikeinheit;
Senden durch das zentrale Computersystem von Flugeinweisungsdaten über die erste Kommunikationsverbindung und die zweite Kommunikationsverbindung, wobei die Flugeinweisungsdaten mindestens mehrere Mitteilungen an Flugzeugführer, NOTAMs, die einem bevorstehenden Flug zugeordnet sind, enthalten;
Empfangen durch das zentrale Computersystem veränderter Flugeinweisungsdaten, die die mehreren NOTAMs, durch Anwender eingegebene Anmerkungen zu einer oder mehreren der mehreren NOTAMs und visuelle Eigenschaften, die einen ungelesenen Zustand oder einen zuvor gelesenen Zustand für jede der mehreren NOTAMs bezeichnen, enthalten;
Speichern der veränderten Flugeinweisungsdaten durch das zentrale Computersystem und
Synchronisieren durch das zentrale Computersystem des zentralen Computersystems, der elektronischen Einrichtung und der bordinternen Luftfahrzeug-Avionikeinheit durch Senden der veränderten Flugeinweisungsdaten über die erste Kommunikationsverbindung und die zweite Kommunikationsverbindung.

2. Verfahren nach Anspruch 1, das ferner Folgendes umfasst:
Empfangen durch das zentrale Computersystem markierter Flugeinweisungsdaten, die Merker, die durch Anwender festgelegte wichtige Bedingungen, die dem bevorstehenden Flug zugeordnet sind, enthalten, wobei die veränderten Flugeinweisungsdaten die markierten Flugeinweisungsdaten enthalten;
Speichern durch das zentrale Computersystem der markierten Flugeinweisungsdaten und
Senden der markierten Flugeinweisungsdaten über die erste Kommunikationsverbindung und die zweite Kommunikationsverbindung.

3. Verfahren nach Anspruch 1, das ferner Folgendes umfasst:
Empfangen durch das zentrale Computersystem mehrerer Mitteilungen an Flugzeugführer, NOTAMs, wobei die Flugeinweisungsdaten die mehreren NOTAMs enthalten;
Speichern der mehreren NOTAMs;
Senden der mehreren NOTAMs über die erste Kommunikationsverbindung als Antwort auf eine Anforderung von der elektronischen Einrichtung;
Empfangen durch das zentrale Computersystem kommentierter NOTAM-Daten von der elektronischen Einrichtung, wobei die kommentierten NOTAM-Daten von Anwendern eingegebene Metadaten, die einer oder mehreren der mehreren NOTAMs zugeordnet sind, enthalten und die veränderten Flugeinweisungsdaten die kommentierten NOTAM-Daten enthalten; und
Speichern der kommentierten NOTAM-Daten; wobei
das Synchronisieren der Flugeinweisungsdaten ferner Folgendes umfasst:
Empfangen einer Anforderung der kommentierten NOTAM-Daten von der bordinternen Luftfahrzeug-Avionikeinheit; und
Senden als Antwort auf die Anforderung der kommentierten NOTAM-Daten über die zweite Kommunikationsverbindung.

4. Verfahren nach Anspruch 1, das ferner Folgendes umfasst:
Empfangen durch das zentrale Computersystem einer Anforderung einer Synchronisierung über mindestens eine der ersten Kommunikationsverbindung und der zweiten Kommunikationsverbindung; wobei
das Synchronisieren ferner Folgendes umfasst:
Senden als Antwort auf die Anforderung der veränderten Flugeinweisungsdaten über die mindestens eine der ersten Kommunikationsverbindung und der zweiten Kommunikationsverbindung.

5. Verfahren nach Anspruch 1, das ferner Folgendes umfasst:
Synchronisieren des zentralen Computersystems, der elektronischen Einrichtung und der bordinternen Luftfahrzeug-Avionikeinheit gemäß einer zeitlich festgelegten Intervallplanung.

6. Verfahren nach Anspruch 1, das ferner Folgendes umfasst:
Synchronisieren des zentralen Computersystems, der elektronischen Einrichtung und der bordinternen Luftfahrzeug-Avionikeinheit gemäß einer ereignisgesteuerten Planung.

7. Zentrales Computersystem zum Managen eines Flugeinweisungsdatensystems, wobei das zentrale Computersystem Folgendes umfasst:
ein Systemspeicherelement (204);
eine Kommunikationseinrichtung (210), die konfiguriert ist, eine erste Kommunikationsverbindung mit einer elektronischen Einrichtung und einer zweiten Kommunikationsverbindung mit einer bordinternen Luftfahrzeug-Avionikeinheit aufzubauen;
ein Modul (206) für visuelle Eigenschaften, das konfiguriert ist, einen ungelesenen Zustand oder einen zuvor gelesenen Zustand für jede der mehreren NOTAMs zu erkennen;
mindestens einen Prozessor (202), der mit dem Systemspeicherelement, der Kommunikationseinrichtung und der Anwenderschnittstelle kommunikationstechnisch gekoppelt ist, wobei der mindestens eine Prozessor konfiguriert ist zum:
Senden von Flugeinweisungsdaten über die erste Kommunikationsverbindung und die zweite Kommunikationsverbindung, wobei die Flugeinweisungsdaten mindestens mehrere Mitteilungen an Flugzeugführer, NOTAMs, die einem bevorstehenden Flug zugeordnet sind, enthalten;
Empfangen über die erste Kommunikationseinrichtung veränderter Flugeinweisungsdaten, die die mehreren NOTAMs, durch Anwender eingegebener Anmerkungen zu einer oder mehreren der mehreren NOTAMs und visueller Eigenschaften, die einen ungelesenen Zustand oder einen zuvor gelesenen Zustand für jede der mehreren NOTAMs bezeichnen, enthalten;
Speichern der veränderten Flugeinweisungsdaten und
Synchronisieren des zentralen Computersystems, der elektronischen Einrichtung und der bordinternen Luftfahrzeug-Avionikeinheit durch Senden der veränderten Flugeinweisungsdaten über die erste Kommunikationsverbindung und die zweite Kommunikationsverbindung.

8. Zentrales Computersystem nach Anspruch 7, wobei der mindestens eine Prozessor ferner konfiguriert ist zum:
Empfangen über die Kommunikationseinrichtung markierter Flugeinweisungsdaten, die Merker, die durch Anwender festgelegte wichtige Bedingungen, die dem bevorstehenden Flug zugeordnet sind, enthalten, wobei die veränderten Flugeinweisungsdaten die markierten Flugeinweisungsdaten enthalten;
Speichern der markierten Flugeinweisungsdaten und
Senden der markierten Flugeinweisungsdaten über die erste Kommunikationsverbindung und die zweite Kommunikationsverbindung.

9. Zentrales Computersystem nach Anspruch 7, wobei der mindestens eine Prozessor ferner konfiguriert ist zum:
Empfangen über die Kommunikationseinrichtung mehrerer Mitteilungen an Flugzeugführer (NOTAMs), wobei die Flugeinweisungsdaten die mehreren NOTAMs enthalten;
Speichern der mehreren NOTAMs;
Senden der mehreren NOTAMs über die erste Kommunikationsverbindung als Antwort auf eine Anforderung von der elektronischen Einrichtung;
Empfangen über die Kommunikationseinrichtung kommentierter NOTAM-Daten von der elektronischen Einrichtung, wobei die kommentierten NOTAM-Daten von Anwendern eingegebene Metadaten, die einer oder mehreren der mehreren NOTAMs zugeordnet sind, enthalten und die veränderten Flugeinweisungsdaten die kommentierten NOTAM-Daten enthalten; und
Speichern der kommentierten NOTAM-Daten; wobei
das Synchronisieren der Flugeinweisungsdaten ferner Folgendes umfasst:
Empfangen einer Anforderung der kommentierten NOTAM-Daten von der bordinternen Luftfahrzeug-Avionikeinheit; und
Senden als Antwort auf die Anforderung der kommentierten NOTAM-Daten über die zweite Kommunikationsverbindung.

10. Zentrales Computersystem nach Anspruch 7, wobei der mindestens eine Prozessor ferner konfiguriert ist zum:
Empfangen durch die Kommunikationseinrichtung einer Anforderung einer Synchronisierung über mindestens eine der ersten Kommunikationsverbindung und der zweiten Kommunikationsverbindung; wobei
das Synchronisieren ferner Folgendes umfasst:
Senden als Antwort auf die Anforderung der veränderten Flugeinweisungsdaten über die mindestens eine der ersten Kommunikationsverbindung und der zweiten Kommunikationsverbindung.

11. Zentrales Computersystem nach Anspruch 7, wobei der mindestens eine Prozessor ferner konfiguriert ist zum:
Synchronisieren des zentralen Computersystems, der elektronischen Einrichtung und der bordinternen Luftfahrzeug-Avionikeinheit gemäß einer zeitlich festgelegten Intervallplanung.

12. Zentrales Computersystem nach Anspruch 7, wobei der mindestens eine Prozessor ferner konfiguriert ist zum:
Synchronisieren des zentralen Computersystems, der elektronischen Einrichtung und der bordinternen Luftfahrzeug-Avionikeinheit gemäß einer ereignisgesteuerten Planung.

## Revendications

1. Procédé pour gérer un système de données de briefing de vol, ce procédé comprenant :
l'établissement, par un système informatique central, d'une première liaison de communication avec un dispositif électronique et d'une deuxième liaison de communication avec une unité avionique à bord d'un aéronef ;
la transmission, par le système informatique central, de données de briefing de vol via la première liaison de communication et la deuxième liaison de communication, ces données de briefing de vol comprenant au moins une pluralité d'avis aux aviateurs, NOTAM, associés à un vol à venir ;
la réception, par le système informatique central, de données de briefing de vol modifiées comprenant la pluralité de NOTAM, des annotations entrées par l'utilisateur relatives à un ou à plusieurs de la pluralité de NOTAM, et des caractéristiques visuelles indiquant un état non lu ou un état déjà lu pour chacun de la pluralité de NOTAM ;
le stockage de ces données de briefing de vol modifiées par le système informatique central ; et
la synchronisation, par le système informatique central, du système informatique central, du dispositif électronique et de l'unité avionique à bord de l'aéronef, en transmettant les données de briefing de vol modifiées via la première liaison de communication et la deuxième liaison de communication.

2. Procédé selon la revendication 1, comprenant en outre :
la réception, par le système informatique central, de données de briefing de vol signalées par drapeaux comprenant des drapeaux indiquant des conditions importantes désignées par l'utilisateur associées au vol à venir, les données de briefing de vol modifiées comprenant ces données de briefing de vol signalées par drapeaux ;
le stockage, par le système informatique central, des données de briefing de vol signalées par drapeaux ; et
la transmission des données de briefing de vol signalées par drapeaux via la première liaison de communication et la deuxième liaison de communication.

3. Procédé selon la revendication 1, comprenant en outre :
la réception, par le système informatique central, d'une pluralité d'avis aux aviateurs, NOTAM, les données de briefing de vol comprenant cette pluralité de NOTAM ;
le stockage de la pluralité de NOTAM ;
en réponse à une demande venant du dispositif électronique, la transmission de la pluralité de NOTAM via la première liaison de communication ;
la réception, par le système informatique central, de données NOTAM annotées venant du dispositif électronique, ces données NOTAM annotées comprenant des métadonnées associées à un ou plusieurs de la pluralité de NOTAM, et les données de briefing de vol modifiées comprenant ces données NOTAM annotées ; et
le stockage des données NOTAM annotées ;
la synchronisation des données de briefing de vol comprenant en outre :
la réception d'une demande des données NOTAM annotées venant de l'unité avionique à bord de l'aéronef ; et
en réponse à cette demande, la transmission des données NOTAM annotées via la deuxième liaison de communication.

4. Procédé selon la revendication 1, comprenant en outre :
la réception, par le système informatique central, d'une demande de synchronisation via au moins soit la première liaison de communication, soit la deuxième liaison de communication ;
la synchronisation comprenant en outre :
en réponse à cette demande, la transmission des données de briefing de vol modifiées via au moins soit la première liaison de communication, soit la deuxième liaison de communication.

5. Procédé selon la revendication 1, comprenant en outre :
la synchronisation du système informatique central, du dispositif électronique et de l'unité avionique à bord de l'aéronef conformément à un programme à intervalles minutés.

6. Procédé selon la revendication 1, comprenant en outre :
la synchronisation du système informatique central, du dispositif électronique et de l'unité avionique à bord de l'aéronef conformément à un programme événementiel.

7. Système informatique central pour gérer un système de données de briefing de vol, ce système informatique central comprenant :
un élément mémoire de système (204) ;
un dispositif de communication (210) configuré de façon à établir une première liaison de communication avec un dispositif électronique et une deuxième liaison de communication avec une unité avionique à bord d'un aéronef ;
un module de caractéristiques visuelles (206) configuré de façon à reconnaître un état non lu ou déjà lu de chacun d'une pluralité d'avis aux aviateurs, NOTAM ;
au moins un processeur (202), couplé de manière communicative à l'élément mémoire du système, au dispositif de communication, et à l'interface utilisateur, cet au moins un processeur étant configuré de façon à :
transmettre des données de briefing de vol via la première liaison de communication et la deuxième liaison de communication, ces données de briefing de vol comprenant au moins une pluralité d'avis aux aviateurs, NOTAM, associés à un vol à venir ;
recevoir, via le dispositif de communication, des données de briefing de vol modifiées comprenant la pluralité de NOTAM, des annotations entrées par l'utilisateur relatives à un ou à plusieurs de la pluralité de NOTAM, et des caractéristiques visuelles indiquant un état non lu ou un état déjà lu pour chacun de la pluralité de NOTAM ;
stocker les données de briefing de vol modifiées ; et à
synchroniser le système informatique central, le dispositif électronique et l'unité avionique à bord de l'aéronef, en transmettant les données de briefing de vol modifiées via la première liaison de communication et la deuxième liaison de communication.

8. Système informatique central selon la revendication 7, dans lequel l'au moins un processeur est configuré en outre de façon à :
recevoir, via le dispositif de communication, des données de briefing de vol signalées par drapeaux comprenant des drapeaux indiquant des conditions importantes désignées par l'utilisateur associées au vol à venir, les données de briefing de vol modifiées comprenant ces données de briefing de vol signalées par drapeaux ;
stocker les données de briefing de vol signalées par drapeaux ; et à
transmettre les données de briefing de vol signalées par drapeaux via la première liaison de communication et la deuxième liaison de communication.

9. Système informatique central selon la revendication 7, dans lequel l'au moins un processeur est configuré en outre de façon à :
recevoir, via le dispositif de communication, une pluralité d'avis aux aviateurs (NOTAM), les données de briefing de vol comprenant cette pluralité de NOTAM ;
stocker la pluralité de NOTAM ;
en réponse à une demande venant du dispositif électronique, transmettre la pluralité de NOTAM via la première liaison de communication ;
recevoir, via le dispositif de communication, des données NOTAM annotées provenant du dispositif électronique, ces données NOTAM annotées comprenant des métadonnées associées à un ou plusieurs de la pluralité de NOTAM, et les données de briefing de vol modifiées comprenant ces données NOTAM annotées ; et à
stocker les données NOTAM annotées ;
la synchronisation des données de briefing de vol comprenant en outre :
la réception d'une demande des données NOTAM annotées venant de l'unité avionique à bord de l'aéronef ; et
en réponse à cette demande, la transmission des données NOTAM annotées via la deuxième liaison de communication.

10. Système informatique central selon la revendication 7, dans lequel l'au moins un processeur est configuré en outre de façon à :
recevoir, via le dispositif de communication, une demande de synchronisation via au moins soit la première liaison de communication, soit la deuxième liaison de communication ;
la synchronisation comprenant en outre :
en réponse à cette demande, la transmission des données de briefing de vol modifiées via au moins soit la première liaison de communication, soit la deuxième liaison de communication.

11. Système informatique central selon la revendication 7, dans lequel l'au moins un processeur est configuré en outre de façon à :
synchroniser le système informatique central, le dispositif électronique et l'unité avionique à bord de l'aéronef conformément à un programme à intervalles minutés.

12. Système informatique central selon la revendication 7, dans lequel l'au moins un processeur est configuré en outre de façon à :
synchroniser le système informatique central, le dispositif électronique et l'unité avionique à bord de l'aéronef conformément à un programme événementiel.
